(19)

**Europäisches Patentamt**
**European Patent Office**
**Office européen des brevets**

(11) **EP 2 966 602 A1**

(12) **EUROPEAN PATENT APPLICATION**

(43) Date of publication:
**13.01.2016 Bulletin 2016/02**

(51) Int Cl.:
*G06Q 10/04* (2012.01)    *G06Q 50/02* (2012.01)

(21) Application number: **15175705.1**

(22) Date of filing: **07.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.07.2014 FR 1456727**

(71) Applicants:
• **Services Petroliers Schlumberger**
**75007 Paris (FR)**
Designated Contracting States:
**FR**
• **Logined B.V.**
**2586 BJ S Gravenhage (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Maerten, Frantz**
**34570 Pignan (FR)**
• **Maerten, Laurent**
**34830 Clapiers (FR)**
• **Joonnekindt, Jean Pierre**
**34000 Montpellier (FR)**
• **Lejri, Mustapha**
**34090 Montpellier (FR)**
• **Malvesin, Emmanuel**
**34000 Montpellier (FR)**
• **Lahetjuzan, Patxi**
**34080 Montpellier (FR)**
• **Levassor, Fabrice**
**34090 Montpellier (FR)**
• **Rotschi, Matthieu**
**34880 Lavérune (FR)**

(74) Representative: **Schlumberger Cambridge Research Limited**
**Intellectual Property Law**
**High Cross**
**Madingley Road**
**Cambridge CB3 0EL (GB)**

(54) **REGIONAL STRESS INVERSION USING FRICTIONAL FAULTS**

(57)    A method for predicting regional stress of a subsurface volume includes obtaining a model matrix of the subsurface volume representing a relationship between a modeled fault slip result generated by a model and a boundary condition applied to the model, the boundary condition having a regional stress attribute and a fault friction attribute, calculating, using the model, the modeled fault slip result based on a selected value of the stress attribute and a selected value of the friction attribute, calculating a cost function representing a difference between the modeled fault slip result and a measurement of the subsurface volume, and minimizing the cost function by iteratively adjusting at least the selected value of the stress attribute to generate a prediction of the regional stress of the subsurface volume.

FIG. 1

EP 2 966 602 A1

**Description**

CROSS-REFERENCE TO RELATED APPLICATIONS

This application claims priority to French Patent Application No. 1456727, filed on July 11, 2014, and entitled: "REGIONAL STRESS INVERSION USING FRICTIONAL FAULTS." Accordingly, this application claims priority to French Patent Application No. 1456727 under 35 U.S.C. § 119(a).

BACKGROUND

A fault may be considered a finite complex three-dimensional surface discontinuity in a volume of earth or rock. Fractures, including, without limitation, joints, veins, dikes, pressure solution seams with stylolites, and so forth, may be propagated intentionally, to increase permeability in formations such as shale, in which optimizing the number, placement, and size of fractures in the formation increases the yield of resources like shale gas.

Stress, in continuum mechanics, may be considered a measure of the internal forces acting within a volume. Such stress may be defined as a measure of the average force per unit area at a surface within the volume on which internal forces act. The internal forces may be produced between the particles in the volume as a reaction to external forces applied to the volume.

Understanding the origin and evolution of faults and the tectonic history of faulted regions can be accomplished by relating fault orientation, slip direction, geologic and geodetic data to the state of stress in the earth's crust. In certain inverse problems, the directions of the remote principal stresses and a ratio of their magnitudes are constrained by analyzing field data on fault orientations and slip directions as inferred from artifacts such as striations on exposed fault surfaces. If faults support sliding friction, the results from the stress inversion might be different compare to frictionless faults.

SUMMARY

In general, in one aspect, the invention relates to a method for predicting regional stress of a subsurface volume. The method comprising: obtaining a model of the subsurface volume, wherein the model comprises a model matrix representing a relationship between a modeled fault slip result generated by the model and a boundary condition applied to the model, wherein the boundary condition comprises a regional stress attribute and a fault friction attribute; calculating, using the model, the modeled fault slip result based on a selected value of the stress attribute and a selected value of the friction attribute; calculating a cost function representing a difference between the modeled fault slip result and a measurement of the subsurface volume; and minimizing the cost function by iteratively adjusting at least the selected value of the stress attribute, wherein iteratively adjusting the selected value to minimize the cost function generates a prediction of the regional stress of the subsurface volume.

In general, in one aspect, the invention relates to a system for predicting fault activity of a subsurface volume. The system comprising: a sensory device configured to obtain a measurement of the subsurface volume; a stress and fracture modeling engine configured to: obtain a model of the subsurface volume, wherein the model comprises a model matrix that represents a relationship between a modeled fault slip result generated by the model and a boundary condition applied to the model, wherein the boundary condition comprises a regional stress attribute and a fault friction attribute; calculate, using the model, the modeled fault slip result based on a selected value of the stress attribute and a selected value of the friction attribute; calculate a cost function representing a difference between the modeled fault slip result and a measurement of the subsurface volume; and minimize the cost function by iteratively adjusting at least the selected value of the stress attribute and the friction attribute, wherein iteratively adjusting the selected value to minimize the cost function generates a prediction of the regional stress of the subsurface volume; and a control device configured to generate, based on the prediction of the regional stress, a control signal of a field operation of the subsurface volume.

In general, in one aspect, the invention relates to a non-transitory computer readable medium storing instructions for predicting fault activity of a subsurface volume. The instructions, when executed by a computer processor, comprising functionality for: obtaining a model of the subsurface volume, wherein the model comprises a model matrix that represents a relationship between a modeled fault slip result generated by the model and a boundary condition applied to the model, wherein the boundary condition comprise a regional stress attribute and a fault friction attribute; calculating, using the model, the modeled fault slip result based on a selected value of the stress attribute and a selected value of the friction attribute; calculating a cost function representing a difference between the modeled fault slip result and a measurement of the subsurface volume; and minimizing the cost function by iteratively adjusting at least the selected value of the stress attribute and the friction attribute, wherein iteratively adjusting the selected value to minimize the cost function generates a prediction of the regional stress of the subsurface volume.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF DRAWINGS

Embodiments of regional stress inversion using frictional faults are described with reference to the following figures. The same numbers are used throughout the figures to reference like features and components.

FIG. 1 is a diagram of an example stress and fracture modeling system.

FIG. 2 is a block diagram of an example computing environment for performing stress and fracture modeling using frictional faults.

FIG. 3 is a block diagram of an example stress and fracture modeling engine.

FIG. 4 is a block diagram comparing techniques for recovering paleostress.

FIG. 5 is a diagram of an example method applied to fracture and conjugate fault planes using data sets without magnitude information.

FIG. 6 is a flow diagram of an example method of stress and fracture modeling using frictional faults.

FIG. 7 and FIG. 8 show an example of stress, fracture, and fault activity modeling using frictional faults.

FIG. 9 shows a computing system in accordance with one or more embodiments of the technology.

DETAILED DESCRIPTION

In the following detailed description of embodiments, numerous specific details are set forth in order to provide a more thorough understanding. However, it will be apparent to one of ordinary skill in the art that embodiments may be practiced without these specific details. In other instances, well-known features have not been described in detail to avoid unnecessarily complicating the description.

Example embodiments provide a method and system for stress and fracture modeling using frictional faults. An example system simulates a far field stress model for a subsurface earth volume, computing one or more stress, strain, and/or displacement. In one or more embodiments, the relationship linking the boundary conditions and geometry (*e.g.*, faults geometry) of the far field stress model to the slip distribution on faults is pre-computed as a model matrix shown in Equation (1) below.

$$\mathbf{S} = \mathbf{M}*\mathbf{b}_{c} \qquad (1)$$

Where S is the slip distribution on faults, **M** is the model matrix, * denotes matrix/vector multiplication, and $b_c$ is the boundary conditions applied to the model and includes parameters (referred to as stress attribute) related to far field stress and parameters (referred to as friction attribute) related to friction on fault surfaces. In one or more embodiments, the model matrix includes a non-linear dependency on the friction attribute. Accordingly, the pre-computed model matrix is dependent on frictional characteristics of the faults in the subsurface volume. Based on the pre-computed model matrix, the system can generate relatively quick results given a far field stress model simulation by adjusting the far field ratio/orientation to recovery paleostress parameters, such as stress, strain, and displacement parameters for any point (referred to as observation points or data points) in the subsurface volume as the user varies the far field stress value. The system may recover one or more tectonic events, or a stress tensor represented by a ratio of principal magnitudes and associated orientation, using at least one of fault geometry, fault sliding friction, well bore data (including fracture orientation and secondary fault plane data), Global Positioning System (GPS) data, Interferometric Synthetic Aperture Radar

(InSAR) data, folded and faulted horizons, tiltmeters, slip and slikenlines on faults. The system can use different types of geologic data from seismic interpretation, well bore readings, and field observation to provide numerous results, such as predicted fracture propagation based on perturbed stress field. Throughout this disclosure, the term "far field stress" may also be referred to as regional stress or tectonic stress.

<u>Definitions</u>

In the description below, certain variables are used in order to simplify the presentation. Table 1 below shows each variable that may be used and the variables' corresponding definition in accordance with one or more embodiments.

**Table 1**

| Variable | Definition |
|---|---|
| $\sigma_R$ | The regional far field stress tensor |
| $\sigma_H$ | The maximum horizontal principal stress (extracted from $\sigma_R$) |
| $\sigma_h$ | The minimum horizontal principal stress (extracted from $\sigma_R$) |
| $\sigma_v$ | The vertical principal stress (extracted from $\sigma_R$) |
| R | The stress ratio defined as $(\sigma_2-\sigma_3)/(\sigma_1-\sigma_3)$ and $\in [0,1]$ |
| **R'** | Another stress ratio $\in [0,3]$, defined $R' = R$ for normal fault regime, $R' = 2 - R$ for strike-slip fault regime, and $R' = 2 + R$ for reverse fault regime. |
| $\mathbf{R}_{\theta,\varphi,\Psi}$ | A rotation matrix defined by the three Euler angles |
| $n$ | The number of triangular elements making the fault surfaces |
| $p$ | The number of observation points or data points |
| $\boldsymbol{b}$ | The slip vector on a triangular element of a fault surface |
| $\theta$ | The orientation of the regional far field stress. In one or more embodiments the orientation is according to the north and oriented clockwise |
| $\sigma_1$ | The maximum principal stress value of a stress tensor |
| $\sigma_2$ | The intermediate principal stress value of a stress tensor |
| $\sigma_3$ | The minimum principal stress value of a stress tensor |
| $\boldsymbol{R}_\theta$ | A rotation matrix along the z-axis of an angle $\theta$ (see above) |
| $k$ | A scaling parameter defined as $\sigma_2/\sigma_1$ |
| $\sigma_{ij}$ | The component $(i,j)$ of a stress tensor |
| $\alpha_i$ | Triplet scalar parameters used for the principal of superposition |
| $\in_{\boldsymbol{P}}$ | The strain tensor computed at point P |
| $\sigma_{\boldsymbol{P}}$ | The stress tensor computed at point P |
| $\boldsymbol{u_p}$ | The displacement field computed at point P |
| $\boldsymbol{b_e}$ | The slip vector computed at the triangular element e |
| $\boldsymbol{A}$ | A 3x3 matrix relating $\alpha$ and $\sigma_R$ |
| $\overrightarrow{\boldsymbol{n_P}}$ | A normal to a plane at point P |
| $u_P^c$ | The displacement field computed at point $P$, where superscript $c$ indicates "computed" |
| $u_P^m$ | The displacement field computed at point $P$, where superscript $m$ indicates "measured" |
| $\mu$ | Sliding friction coefficient on fault surface |

<u>Overview</u>

This disclosure describes stress and fracture modeling using frictional faults. Given diverse input data, such as faults geometry with sliding friction coefficient, and selectable or optional data sets or data measures, including one or more of fault throw, dip-slip or slickenline directions, stress measurements, fracture data, secondary fault plane orientations, GPS data, InSAR data, geodetic data from surface tilt-meters, laser ranging, etc., the example system can quickly generate or recover numerous types of results. The systems and methods described herein apply multiple geomechanical simulation runs to fault surfaces with complex geometry in at least three dimensions (3D), and the faults are, by nature, of finite dimension and not infinite or semi-infinite. The results may include, for example, one or more of stress, strain, and/or displacement parameters in response to one or more of a user query or an updated parameter, remote stress states for multiple tectonic events, prediction of intended future fracturing, differentiation of preexisting fractures from induced fractures, and so forth. The diverse input data can be derived from well bore data, seismic interpretation, field observation, etc.

The example systems and methods described below are applicable to many different reservoir and subsurface operations, including, without limitation, exploration and production operations for natural gas and other hydrocarbons, storage of natural gas, hydraulic fracturing and matrix stimulation to increase reservoir production, water resource management including development and environmental protection of aquifers and other water resources, capture and underground storage of carbon dioxide ($CO_2$), and so forth.

In an example implementation, a system applies a 3D boundary element technique using frictional faults for heterogeneous, isotropic whole-space (*i.e.,* considering the effect of earth surface) or half-space (*i.e.,* without considering the effect of earth surface) media. Based on the pre-computed model matrix, the example system can assess a cost function to generate fast results, such as stress, strain, and displacement parameters for any point in a subsurface volume as the user varies the far field stress value. In one implementation, the system may use fault geometry and fault sliding friction coefficient and well bore data, including, e.g., fracture orientation, secondary fault plane data, and/or in-situ stress measurement by hydraulic fracture, to recover one or more tectonic events or a stress tensor represented by a ratio of principal magnitudes and the associated orientation. The system can use many different types of geologic data from seismic interpretation, well bore readings, and field observation to provide a variety of results, such as predicted fracture propagation based on perturbed stress field.

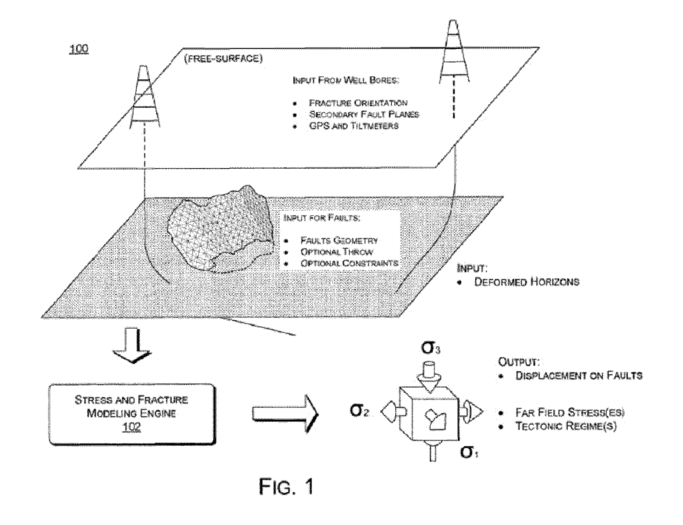

FIG. 1 shows an example stress and fracture modeling system 100. The example system 100 may be capable of solving a variety of geomechanical problems. The faults geometry may be known (and optionally, measured fault throw and imposed inequality constraints such as normal, thrust, etc., may be known). The user may have access to one or more of data from well bores (*e.g.,* fracture orientation, in-situ stress measurements, secondary fault planes), geodetic data (*e.g.,* InSAR, GPS, and tilt-meter), and/or interpreted horizons. An example stress and fracture modeling engine 102 and/or corresponding example methods can recover the remote stress state and tectonic regime for relevant tectonic event(s), as well as displacement discontinuity on faults, and estimate the displacement and perturbed strain and stress fields anywhere within the system, for example, for a given imposed sliding coefficient on faults (*i.e.,* friction coefficient of a sliding fault, also referred to as sliding fault coefficient).

Using the pre-computed model matrix, the example stress and fracture modeling system 100 or engine 102 may perform a simulation by changing the boundary conditions (*e.g.*, far field stress or sliding friction coefficient) without re-computing the model matrix. Then, as introduced above, applications for the example system 100 may include one or more of stress interpolation and fracture modeling, recovery of tectonic event(s), quality control on interpreted faults, real-time computation of perturbed stress and displacement fields when the user is performing one or more of parameters estimation, prediction of fracture propagation, distinguishing preexisting fractures from induced fractures, and numerous other applications.

Example Environment

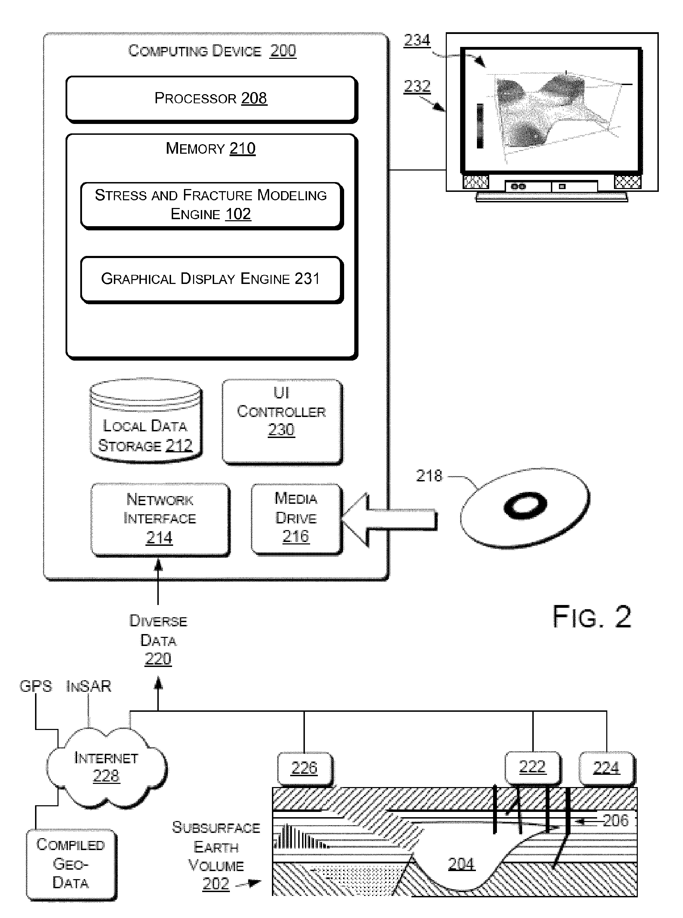

FIG. 2 shows the example system 100 of FIG. 1 in the context of a computing environment, in which stress and fracture modeling using frictional faults can be performed.

In the illustrated example, the computing device 200 is communicatively coupled via sensory devices (and control devices) with a real-world setting, for example, an actual subsurface earth volume 202, reservoir 204, depositional basin, seabed, etc., and associated wells 206 for producing a petroleum resource, for water resource management, or for carbon services, and so forth.

In the shown implementation, a computing device 200 implements a component, such as the stress and fracture modeling engine 102 and graphical display engine 231. The stress and fracture modeling engine 102 and graphical display engine 231 are illustrated as software, but can be implemented as hardware or as a combination of hardware and software instructions.

The stress and fracture modeling engine 102 includes functionality to perform an analysis, *e.g.*, using a cost function of a stress ratio value and an orientation value. Performing the analysis is discussed below. In one or more embodiments, the stress ratio value may be defined as $\Phi$ in the equations below. The stress and fracture modeling engine 102 may further include functionality to calculate, for a particular point in the stress domain diagram, a fracture prediction, a perturbed stress field, and/or a displacement field.

When executing, such as on processor 208, the stress and fracture modeling engine 102 is operatively connected to a graphical display engine 231. For example, the stress and fracture modeling engine 102 may be part of the same software application as the graphical display engine 231, the graphical display engine 231 may be a plug-in for the stress and fracture modeling engine 102, or another method may be used to connect the graphical display engine 231 to the stress and fracture modeling engine 102. Continuing with FIG. 2, the graphical display engine 231 further includes functionality to receive a selection of a point, request a fracture prediction, a perturbed stress field, and/or a displacement field for the particular point from the stress and fracture modeling engine 102 in response to the selection, and present the fracture prediction, the perturbed stress field, and/or the displacement field. In one or more embodiments, the graphical display engine 231 is operatively connected to the user interface controller 230 and display 232.

The computing device 200 may be a computer, computer network, or other device that has a processor 208, memory 210, data storage 212, and other associated hardware such as a network interface 214 and a media drive 216 for reading and writing a removable storage medium 218. The removable storage medium 218 may be, for example, a compact disc (CD); digital versatile disk / digital video disc (DVD); flash drive, etc. The removable storage medium 218 contains instructions which, when executed by the computing device 200, cause the computing device 200 to perform one or more example methods described herein. Thus, the removable storage medium 218 may include instructions for implementing and executing the example stress and fracture modeling engine 102 and/or the graphical display engine 231. At least some parts of the example stress and fracture modeling engine 102 can be stored as instructions on a given instance of the removable storage medium 218, removable device, or in local data storage 212, to be loaded into memory 210 for execution by the processor 208. Specifically, software instructions or computer readable program code to perform embodiments may be stored, temporarily or permanently, in whole or in part, on a non-transitory computer readable medium such as a CD, a DVD, a local or remote storage device, local or remote memory, a diskette, or any other computer readable storage device.

Although the illustrated example stress and fracture modeling engine 102 and the graphical display engine 231 are depicted as a program residing in memory 210, a stress and fracture modeling engine 102 and/or the graphical display engine 231 may be implemented as hardware, such as an application specific integrated circuit (ASIC) or as a combination of hardware and software.

In this example system, the computing device 200 receives incoming data 220, such as faults geometry, fault sliding friction, and many other kinds of data from multiple sources, such as well bore measurements 222, field observation 224, and seismic interpretation 226. The computing device 200 can receive one or more types of data sets 220 via the network interface 214, which may also receive data from a network *(e.g.,* the Internet 228), such as GPS data and InSAR data.

The computing device 200 may compute (or calculate) and compile modeling results, simulator results, and control results. The display controller 230 may output geological model images and simulation images and data to a display 232. The images may be a 2D or 3D simulation 234 of stress and fracture results using frictional faults. The example stress and fracture modeling engine 102 may also generate one or more visual user interfaces (UIs) for input and/or display of data.

The example stress and fracture modeling engine 102 may also generate, or ultimately produce, control signals to control field operations associated with the subsurface volume. For example, the field operations may be performed using drilling and exploration equipment, well control injectors and valves (or other control devices in real-world control of the reservoir 204), transport and delivery network, surface facility, and so forth.

Thus, an example system 100 may include a computing device 200 and interactive graphics display unit 232. The computing system as a whole may constitute simulators, models, and the example stress and fracture modeling engine 102.

Example Engine

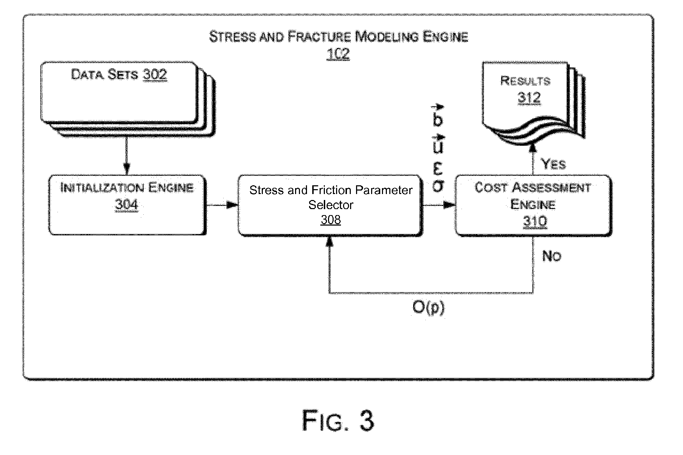

FIG. 3 shows the example stress and fracture modeling engine 102 in greater detail than in FIG. 1 and FIG. 2. The illustrated implementation is one example configuration for the sake of description, to introduce features and components of an engine that performs the example stress and fracture modeling using frictional faults. The illustrated components are examples. Different configurations or combinations of components than those shown may be used to perform the stress and fracture modeling functions, and different or additional components may also be used. As introduced above, the example stress and fracture modeling engine 102 can be implemented in hardware, or in combinations of hardware and software. Illustrated components are communicatively coupled with each other for communication as desired. Arrows are shown to suggest process flow or data flow, since the components can communicate with each other as desired.

The example stress and fracture modeling engine 102 illustrated in FIG. 3 includes a buffer for data sets 302 or at least access to the data sets 302, an initialization engine 304, a stress and friction parameter selector 308, a cost assessment engine 310, and a buffer or output for results 312. These components are shown for descriptive purposes. Other components, or other arrangement of the components, can enable various implementations of the example stress and fracture modeling engine 102. The functionality of the example stress and fracture modeling engine 102 will be described next.

Operation of the Example System and Engine

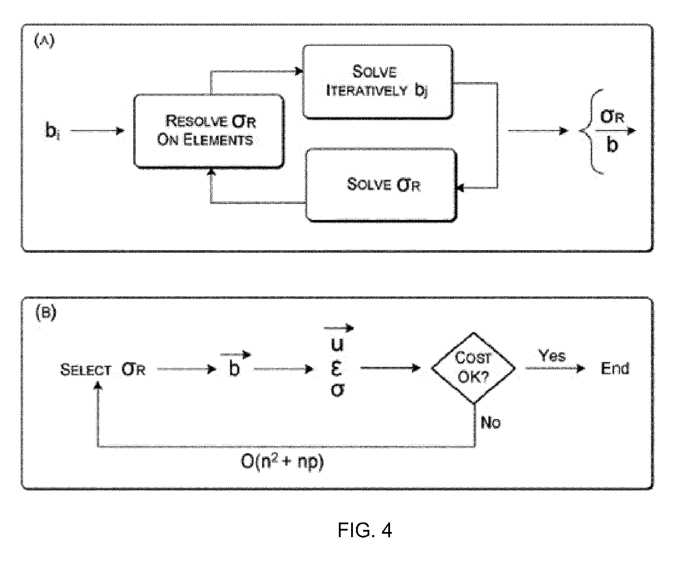

FIG. 4 shows various methods for recovering paleostress. FIG. 4(a) shows a conventional technique that uses slip distributions on faults as data input, but provides unstable results. The technique of FIG. 4(a) cannot augment the slip distributions with other forms of data input, such as GPS data, and so forth. FIG. 4(b) depicts a 2D Monte Carlo method, with or without using frictional faults. The example method shown in FIG. 4(b) may be implemented by the example stress and fracture modeling engine 102. For example, in one implementation the initialization engine 304, generates the model matrix associated with a subsurface volume 202. The stress and friction parameter selector 308 iteratively select random parameter values (*e.g.*, stress ratio and orientation angle) for the far field stress to apply to the model in order to minimize a cost at the cost assessment engine 310. In addition, in one or more embodiments, a value of the friction attribute (*e.g.*, sliding friction coefficient of faults) is assigned by a user in the steps of iteratively applying the model. Alternatively, in one or more embodiments, the friction attribute (*e.g.*, sliding friction coefficient of faults, along with the stress ratio and orientation) is randomly assigned a value by the stress and friction parameter selector 308 in the steps of iteratively applying the model. While certain paleostress inversion methods may apply a full mechanical scenario, the stress and fracture modeling engine 102 improves upon certain techniques by using multiple types of data, and by incorporating sliding friction on faults. Data sets 302 to be used are generally of two types: those which provide orientation information (such as fractures, secondary fault planes with internal friction angle, and fault striations, etc.), and those which provide magnitude information (such as fault slip, GPS data, InSAR data, etc.). Some paleostress inversion methods are computed using slip measurements on fault planes.

The technique shown in FIG. 4(a) executes an operation that proceeds in two stages: (i) resolving the initial remote stress tensor $\sigma_R$ onto the fault elements that have no relative displacement data and solving for the unknown relative displacements $b_j$ and, (ii) using the computed and known relative displacements to solve for $\sigma_R$. An iterative solver is used, that cycle between stages (i) and (ii) until convergence.

The technique shown in FIG. 4(b), which is the main method described here, is based on a Monte-Carlo algorithm using frictional faults. In this diagram, $n$ and $p$ are a number of triangular elements modeling the faults and the number of data points, respectively. For a given simulation, a random far field stress $\sigma_R$, is chosen, and the corresponding displacement discontinuity $\vec{b}$ on faults is computed. In one or more embodiments, the sliding friction coefficient is assigned a constant value throughout the process of iteratively minimizing cost function. In one or more embodiments, the sliding friction coefficient is assigned a random value along with the far field stress $\sigma_R$ and both are inverted together via the process of iteratively minimizing cost function. Then, as a post-process at data points, and depending on the type of measurements, cost functions are computed using either the displacement, strain, or stress field. In this scenario, for hundreds of thousands of simulations, the best cost (close to zero) is retained as a solution.

A numerical technique for performing the example methods is described next. Then, a reduced remote tensor used for simulation is described and an estimate of the complexity are also described.

In one implementation, a formulation applied by the stress and fracture modeling engine 102 (e.g., the initialization engine 304) can be executed using IBEM3D, a successor of POLY3D (POLY3D is described by F. Maerten, P. G. Resor, D. D. Pollard, and L. Maerten, Inverting for slip on three-dimensional fault surfaces using angular dislocations, Bulletin of the Seismological Society of America, 95:1654-1665, 2005, and by A. L. Thomas, Poly3D: a three-dimensional, polygonal element, displacement discontinuity boundary element computer program with applications to fractures, faults, and cavities in the earth's crust, Master's thesis, Stanford University, 1995.) IBEM3D is a boundary element code based on the analytical solution of an angular dislocation in a homogeneous or inhomogeneous elastic whole-space or half-space. An iterative solver is employed for speed considerations and for parallelization on multi-core architectures. (see, for example, F. Maerten, L. Maerten, and M. Cooke, Solving 3d boundary element problems using constrained iterative approach, Computational Geosciences, 2009.) Here, inequality constraints are used to impose sliding friction on fault surfaces. In other words, IBEM3D may be used in this manner to compute (or calculate) dependency of model matrix M on the sliding friction coefficient. In the selected code, faults are represented by triangulated surfaces with discontinuous displacement and friction coefficient. The advantage is that three-dimensional fault surfaces more closely approximate curvi-planar surfaces and curved tip-lines without introducing overlaps or gaps.

Mixed boundary conditions may be prescribed, and when traction boundary conditions are specified, the initialization engine 304 solves for unknown Burgers's components. In the present method, traction boundary conditions are imposed for the three local axis of the triangular elements (dip, strike and normal axis) since faults are frictional (see Maerten et al., Solving 3D boundary element problems using constrained iterative approach, Computational Geosciences, 2010). After the far field stress model is constructed and the model matrix pre-computed, it is possible to compute (or calculate) anywhere (within the whole-space or half-space, displacement) strain or stress at observation points, as a post-process. Specifically, the stress field at any observation point is given by the perturbed stress field due to slipping faults plus the contribution of the remote stress. Consequently, obtaining the perturbed stress field due to the slip on faults is not enough. Moreover, the estimation of fault slip from seismic interpretation is given along the dip-direction. Nothing is known along the strike-direction, and a full mechanical scenario may be involved to recover the unknown components of the slip vector, as it will impact the perturbed stress field. Changing the imposed far field stress (orientation and or relative magnitudes) modifies the slip distribution and consequently the perturbed stress field. The perturbed stress field also depends on the sliding friction coefficient, which may be assigned a fixed value throughout the Monte Carlo method iterations by the user. In a different embodiment, the sliding friction coefficient, like the far field stress attribute, may be assigned a random value throughout the Monte Carlo method iterations. As a result, the magnitude and orientation of the slip distribution is changed accordingly. In general, a code such as IBEM3D is well suited for computing the full displacement vectors on faults, and may be optimized using an $\mathcal{H}$-matrix technique. The unknown, for purposes of modeling, remains the estimation of the far field stress that has to be imposed as boundary conditions in the inversion process. In one or more embodiments, the stress ratio and orientation of the far field stress are determined in the inversion process based on a given set of fault surfaces using the aforementioned Monte Carlo method. Specifically, the set of fault surfaces is described as a known fault geometry while the far field stress is modeled by mathematical formulations described below.

In an example method, which may be implemented by the stress and fracture modeling engine 102, a model composed of multiple fault surfaces is subjected to sliding friction coefficient and a constant far field stress tensor ($\sigma_R$ defined in the global coordinate system by Equation (2) below assuming a sub-horizontal far field stress (but the present methodology is not restricted to that case).

In the formulation below, $\theta$ is defined as a value between 0 and $\pi$, rather than between $-\pi/2$ and $\pi/2$. Further, $\theta = 0$ corresponds to the north and the angle is defined clockwise.

$$\sigma_R = R_{\theta,\varphi,\Psi} \begin{bmatrix} \sigma_h & & \\ & \sigma_H & \\ & & \sigma_v \end{bmatrix} R_{\theta,\varphi,\Psi}^T \qquad (2)$$

Since the addition of a hydrostatic stress does not change $\sigma_R$, the far field stress tensor $\sigma_R$ can be written as in Equation (3), where $R_\theta$ is the rotation matrix along the vertical axis (clockwise) with $\theta \in [0,\pi]$:

$$\sigma_R = R_\theta \begin{bmatrix} \sigma_h - \sigma_v & \\ & \sigma_H - \sigma_v \end{bmatrix} R_\theta^T \qquad (3)$$

Using the above embodiment, the definition of a regional stress has three unknowns, namely ($\sigma_h - \sigma_v$), ($\sigma_h - \sigma_v$), and $\theta$. Expressing (2) using $\sigma_1$, $\sigma_2$ and $\sigma_3$ for the three Andersonian fault regimes (Anderson, E., The dynamics of faulting. Edinburgh Geol. Soc., 1905 8(3):387-402), factorizing with ($\sigma_1-\sigma_3$) and introducing the stress ratio, R = ($\sigma_2-\sigma_3$)/($\sigma_1-\sigma_3$) $\in [0,1]$, the Equation (4) results as follows:

$$\sigma_R = \begin{cases} (\sigma_1 - \sigma_3)R_\theta \begin{bmatrix} -1 & \\ & R-1 \end{bmatrix} R_\theta^T & \text{for Normal fault regime} \\ (\sigma_1 - \sigma_3)R_\theta \begin{bmatrix} -R & \\ & 1-R \end{bmatrix} R_\theta^T & \text{for Wrench fault regime} \\ (\sigma_1 - \sigma_3)R_\theta \begin{bmatrix} R & \\ & 1 \end{bmatrix} R_\theta^T & \text{for Thrust fault regime} \end{cases} \qquad (4)$$

By changing R to R' as shown in equation (5) as follows, a unique stress shape parameter R' is created for the three fault regimes together:

$$R' \in [0,3] = \begin{cases} R & \in [0,1] & \text{for Normal fault regime} \\ 2-R & \in [1,2] & \text{for Wrench fault regime} \\ 2+R & \in [2,3] & \text{for Thrust fault regime} \end{cases}, \qquad (5)$$

In one or more embodiments, while R is referred to as the stress ratio, R' incorporate the stress ratio, R, and the fault regime altogether.. Omitting the scaling factor ($\sigma_1$ - $\sigma_3$), the regional stress tensor in (23) is defined with two parameters, $\theta$ and R' with the following boundaries:

$$\begin{cases} 0 \leq \theta \leq \pi \\ 0 \leq R' \leq 3 \end{cases} \qquad (6)$$

From ($\theta$,R'), it now possible to determine the components of the far field stress:

($\theta$,R')$\rightarrow$($\sigma_{00}$, $\sigma_{01}$, $\sigma_{11}$) with:

$$\begin{cases} \sigma_{00} = \sin\beta - \cos\beta \cos^2\theta \\ \sigma_{01} = \cos\beta \sin\theta \cos\theta \\ \sigma_{11} = \sin\beta - \cos\beta \sin^2\theta \end{cases} \qquad (7)$$

and $\beta$ being an angle defined as:

$$\begin{cases} \beta = \tan^{-1}\left(\frac{R'-1}{R'}\right) \text{ for normal fault regime} \\ \beta = \tan^{-1}(R'-1) \text{ for strike} - \text{slip fault regime} \\ \beta = \tan^{-1}\left(\frac{1}{3-R'}\right) \text{ for thrust fault regime} \end{cases} \qquad (8)$$

Further, Algorithm to determine the far field stress using frictional fault is described in ALGORITHM (1) below:

---

ALGORITHM (1): Paleostress Estimation Using Frictional Faults

---

**Input**: Faults geometry + sliding friction coefficient

**Input**: Data set

**Output**: $\sigma_R$ // the estimated paleostress

**Initialize**: Compute (or calculate) and store the model matrix as is or using an approximation such as the H-Matrix (see Maerten F. et al., Solving 3D boundary element problems using constrained iterative approach, Computational Geosciences, 2010)

**Let** $c = 1$ // initial cost

**for** $i = 1\ to\ n_p$ do

      Randomly generate $\theta \in [0, \pi]$

      Randomly generate $R' \in [0,3]$

      Construct the far field stress ($\sigma_{00}$, $\sigma_{01}$, $\sigma_{11}$) using Equations (7) and (8)

Apply the far field stress to the model matrix as shown in Equation (1) and compute (or calculate) the fault slip and stress/strain/displacement at data points

// Compute (or calculate) the corresponding cost, for example using cost function described below

d = cost(dataset)

**if** $d \leq c$ **then**

$\sigma_R$ = Stress tensor given by (R',θ)

$c = d$

**end**

**end**

---

While the above discussion presents one example formulation, other formulations may be used without departing from the scope of the claims. For example, the sliding friction coefficient may be assigned a constant value (*e.g.,* 0.4) for the Algorithm (1). In this example, the Algorithm (1) is used to invert the far field stress $\sigma_R$. In another example, in addition to randomly generating θ and R', the sliding friction coefficient may be assigned a random value for each iteration of the Algorithm (1). In this example, the Algorithm (1) is used to invert both the far field stress $\sigma_R$ as well as the sliding friction coefficient.

Data Sets

The particularity of this method considers that many different kinds of data sets 302 can be used to constrain the inversion. Certain data may include orientation information only, while other type(s) of data may further include displacement and/or stress magnitude information.

For opening fractures (*e.g.*, joints, veins, dikes) the orientation of the normal to the fracture plane indicates the direction of the least compressive stress direction in 3D (($\sigma_3$). Similarly, the normals to pressure solution seams and stylolites indicate the direction of the most compressive stress ($\sigma_1$). Using measurements of the orientations of fractures, pressure solution seams, and stylolites as the data sets 312 allows the stress, fracture, and fault activity modeling engine 102 to recover the tectonic regime which generated such features.

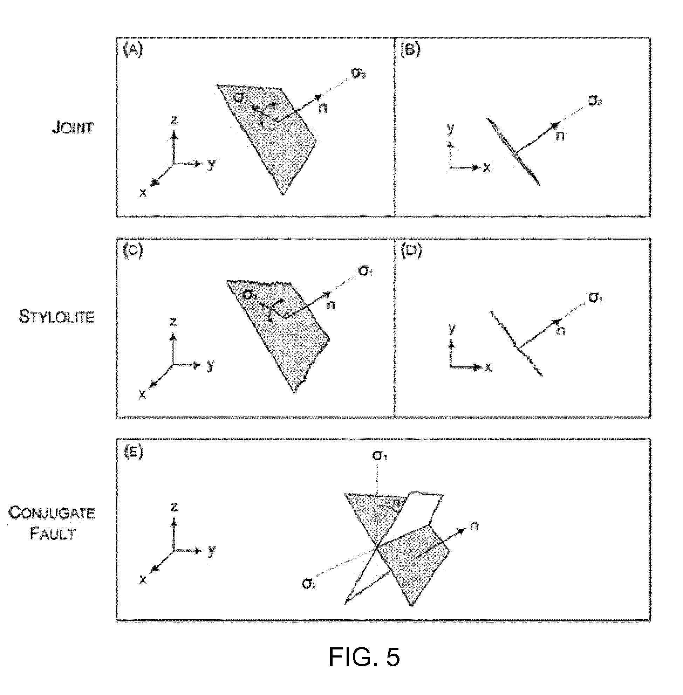

FIG. 5 shows fracture and conjugate fault planes. FIG. 5(a) shows orientation of $\sigma_3$, relative to an opening fracture (joints, veins, dikes) given by its normal $\vec{n}$ in 3D. FIG. 5(b) shows the same as FIG. 5(a) except for an orientation of $\sigma_3$ relative to a joint given by its projected normal $\vec{n}$ (*e.g.,* trace on outcrop). FIG. 5(c) and FIG. 5(d) show the same as FIG. 5(a) and FIG. 5(b) except shown for a stylolite. FIG. 5(e) shows orientation of $\sigma_2$ and $\sigma_1$ relative to conjugate fault-planes given by one of the normal $\vec{n}$ in 3D and the internal friction angle $\theta$ (this friction angle is not related to the sliding friction on fault). The goal is to determine the best fit of the far field stress $\sigma_R$, and therefore the θ and R', given some orientations of opening fracture planes for which the normals coincide with the directions of the least compressive stress $\sigma_3^P$ at *P*, or equivalently for which the plane of the fracture contains the most compressive stress ($\sigma_1$), as in FIG. 5(a) and FIG. 5(b).

Example cost functions based on various different types of data sets 302 and fault geometry depicted in FIG. 5 are described below.

Using data associated with joints

The cost function for joints is defined as:

$$f_{frac} = \frac{1}{2m}\sum_p \left( (\sigma_1^p . n^p)^2 + (\sigma_2^p . n^p)^2 \right)^{\frac{1}{2}} \qquad (22)$$

where "." is the dot-product, $\vec{n}$ is the normal to a fracture plane, and m is the number of observation points.

Similarly, for pressure solution seams and stylolites, the cost function is defined as in Equation (22) using the least compressive stress $\sigma_3$ as in Equation (24):

$$f_{styl} = \frac{1}{2m}\sum_p \left( (\sigma_3^p . n^p)^2 + (\sigma_2^p . n^p)^2 \right)^{\frac{1}{2}} \qquad (24)$$

Using data associated with secondary fault planes

The orientation of secondary fault planes that develop in the vicinity of larger active faults may be estimated using a Coulomb failure criteria, defined by Equation (25):

$$\tan(2\theta) = 1/\mu \qquad (25)$$

where $\theta$ is the angle of the failure planes to the maximum principal compressive stress $\sigma_1$ and $\mu$ is the coefficient of internal friction. Two conjugate failure planes intersect along $\sigma_2$ and the fault orientation is influenced by the orientation of the principal stresses and the value of the friction.

The cost function is therefore defined by Equation (26):

$$f_{fault} = \frac{1}{2m}\Sigma_P \left[ (\vec{\sigma}_2^P . \vec{n}^P)^2 + \left( \frac{|sin^{-1}(\vec{\sigma}_1^P . \vec{n}^P)| - \theta}{\pi} \right)^2 \right]^{1/2} \qquad (26)$$

where $\sigma_1$ is the direction of the most compressive stress and $\sigma_2$ is the direction of the intermediate principal stress. The first term of the right hand side in Equation (26) maintains an orthogonality between the computed $\sigma_2$ and the normal of the fault plane, whereas the second term ensures that the angle between the computed $\sigma_1$, and the fault plane is close to $\theta$ (see FIG. 5(E)).

Using data associated with fault striations

In the case of fault striations, the cost function is defined as in Equation (27):

$$f_{stri} = \frac{1}{2m}\sum_p \left( 1 - (d_s^c . d_s^m)^2 \right)^{\frac{1}{2}} \qquad (27)$$

where $\vec{d}_s^c$ and $\vec{d}_s^m$ represent the normalized slip vector from a simulation and the measured slip vector, respectively.

Using GPS data

In the case of a GPS data set, the cost function is defined in Equation (29):

$$f_{gps} = \frac{1}{2m}\sum_p \left[\left(1 - \frac{u_p^m \cdot u_p^c}{\|u_p^m\|\|u_p^c\|}\right)^2 + \left(1 - \frac{u_p^m}{u_p^c}\right)^2 (u_p^c - u_p^m)^2\right]^{\frac{1}{2}} \qquad (29)$$

where $\vec{u}_P^m$ is the globally normalized measured elevation changed at point *P* from the horizon and $\vec{u}_P^c$ is the globally normalized computed elevation change for a given far field stress. The first term on the right hand side in Equation (29) represents a minimization of the angle between the two displacement vectors, whereas the second term represents a minimization of the difference of the norm.

Using InSAR data

When using an InSAR data set, there may be two possibilities. Either the *global* displacement vectors of the measures are computed using the displacement *u* along the direction of the satellite line of sight s, in which case Equation (30) is used:

$$\vec{u}_P^m = \vec{u}_{insar} = u.\vec{s} \qquad (30)$$

and the same procedure that is used for the GPS data set (above) is applied with the computed $\vec{u}_{P,}^c$ or, the computed displacement vectors are computed *along* the satellite line of sight, in which case Equation (31) is used:

$$u_P^c = \vec{u}.\vec{s} \qquad (31)$$

where "." is the dot product. The cost function is consequently given by Equation (32):

$$f_{insar} = \frac{1}{m}\sum_p \left(1 - \left(\frac{u_s^c}{u_s^m}\right)^2\right)^{\frac{1}{2}} \qquad (32)$$

Using data associated with a flattened horizon

Using the mean plane of a given seismic horizon (flattened horizon), the stress and fracture modeling engine 102 first computes (or calculates) the change in elevation for each point making the horizon. Then, the GPS cost function is used, for which the $u_z$ component is provided, giving Equation (33):

$$f_{horizon} = \frac{1}{m}\sum_p \left(1 - \left(\frac{u_s^c}{u_s^m}\right)^2\right)^{\frac{1}{2}} \qquad (33)$$

If pre-folding or post-folding of the area is observed, the mean plane can no longer be used as a proxy. Therefore, a smooth and continuous fitting surface has to be constructed which remove the faulting deformations while keeping the folds. Then, the same procedure as for the mean plane is used to estimate the paleostress. In some circumstances and prior to defining the continuous fitting surface, a method may filter the input horizon from noises possessing high frequencies, such as corrugations and bumps, while preserving natural deformations.

Using dip-slip information

When dip-slip data is used, the cost function is defined as in Equation (34):

$$f_{ds} = \frac{1}{m} \sum_{p} \left( 1 - \left( \frac{b_e^c}{b_e^m} \right)^2 \right)^{\frac{1}{2}} \qquad (34)$$

where $b_e^m$ is the measured dip-slip magnitude for a triangular element e, and $b_e^c$ is the computed dip-slip magnitude.

Using multiple types of available information

The example stress and fracture modeling engine 102 can combine the previously described cost functions to better constrain stress inversion using available data *(e.g.,* all available data, including, without limitation, fault and fracture plane orientation data, GPS data, InSAR data, flattened horizons data, dip-slip measurements from seismic reflection, fault striations, etc.). Furthermore, data can be weighted differently, and each datum can also support a weight for each coordinate.

Conclusion and perspectives

The example stress and fracture modeling engine 102 using frictional faults applies for complex models. Furthermore, the formulation executed by the example stress and fracture modeling engine 102 enables paleostress inversion using multiple types of data such as fracture orientation, secondary fault planes, GPS, InSAR, fault throw, and fault slickenlines. In one implementation, using fracture orientation and/or secondary fault planes from well bores, the stress and fracture modeling engine 102 recovers one or more tectonic events, the recovered stress tensor being given by the orientation and ratio of the principal magnitudes. The example stress and fracture modeling engine 102 and associated methods can be applied across a broad range of applications, including: stress interpolation in a complexly faulted reservoir, fractures prediction, quality control on interpreted faults, real-time computation of perturbed stress and displacement fields while doing interactive parameter estimation, fracture prediction, discernment of induced fracturing from preexisting fractures, and so forth.

In a variation, another application of the stress and fracture modeling engine 102 and associated methods is evaluation of the perturbed stress field (and therefore the tectonic event(s)) for recovering "shale gas." Since shale has low matrix permeability, gas production in commercial quantities may involve fractures to provide permeability. This may be done by hydraulic fracturing to create extensive artificial fractures around well bores, and therefore involves a good understanding of how fractures will propagate according to the perturbed stress field.

Example Methods

While the various blocks in these flowcharts are presented and described sequentially, one of ordinary skill will appreciate that some or all of the blocks may be executed in different orders, may be combined or omitted, and some or all of the blocks may be executed in parallel. Furthermore, the blocks may be performed actively or passively. For example, some blocks may be performed using polling or be interrupt driven, in accordance with one or more embodiments. By way of an example, determination blocks may not involve a processor to process an instruction unless an interrupt is received to signify that a condition exists in accordance with one or more embodiments. As another example, determination blocks may be performed by performing a test, such as checking a data value to test whether the value is consistent with the tested condition in accordance with one or more embodiments.

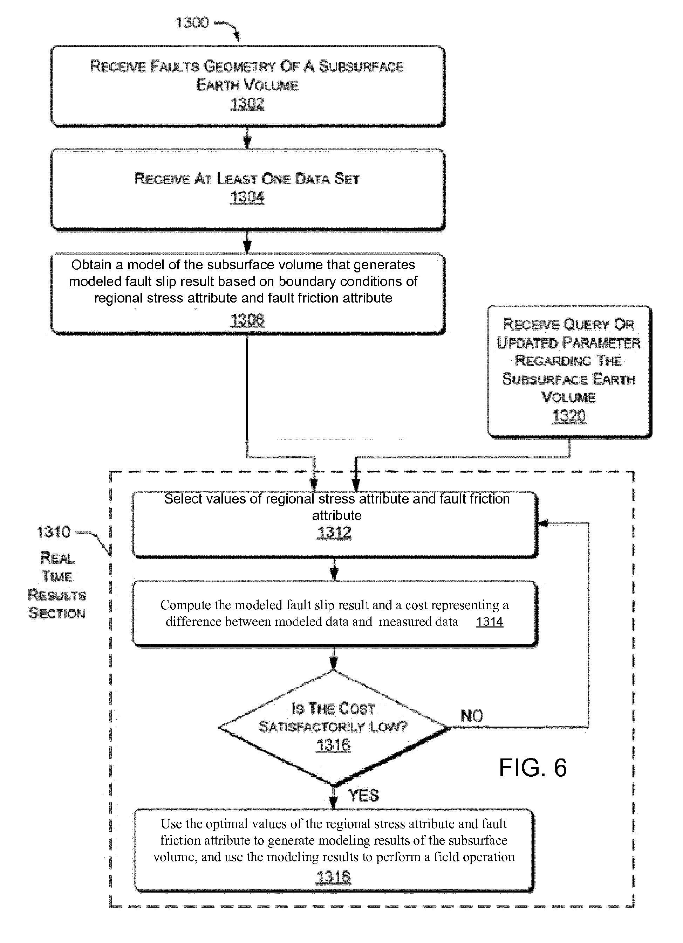

FIG. 6 shows an example method 1300 of stress and fracture modeling using frictional faults. In the flow diagram, the operations are summarized in individual blocks. The example method 1300 may be performed by hardware or combinations of hardware and software, for example, by the example stress and fracture modeling engine depicted in FIG. 3 above.

At block 1302, faults geometry for a subsurface earth volume is received.

At block 1304, at least one data set associated with the subsurface earth volume is also received. In one or more embodiments, the data set includes measurement of the subsurface volume, such as seismic interpretation data, well bore data, and/or field observation data. More specifically, the measurement of the subsurface volume may include fault geometry data, fracture orientation data, stylolites orientation data, secondary fault plane data, fault throw data, slickenline data, GPS data, InSAR data, laser ranging data, tilt-meter data, displacement data for a geologic fault, and/or stress magnitude data for the geologic fault.

At block 1306, a model of the subsurface volume is obtained. In one or more embodiments, the model includes a model matrix that represents a relationship between a modeled fault slip result generated by the model and a boundary condition applied to the model. For example, the model may be based on the Equation (1) described above where the boundary condition includes a regional stress attribute and a fault friction attribute.

At block 1310, a post-process segment of the method commences, that can compute (or calculate) numerous real-time results using frictional faults.

At block 1312, random parameter values for the regional stress attribute (e.g., R' and θ described above) are selected. In one or more embodiments, a value of the fault friction attribute (e.g., sliding frictional coefficient) is also selected.

At block 1314, the modeled fault slip result is computed using the model based on the randomly selected values of the stress attribute. For example, the randomly selected values are selected by a computer processor using Monte Carlo method. In one or more embodiments, the modeled fault slip result is computed based on a user selected value of the friction attribute. In one or more embodiments, the modeled fault slip result is computed based on a randomly selected value of the friction attribute that is also selected by the computer processor using Monte Carlo method. In one or more embodiments, the modeled fault slip result includes perturbed strain, stress, and/or displacements field, as well as other frictional faults dependent attributes of the subsurface volume. In one or more embodiments, a cost is computed to represent a difference between modeled data (e.g., modeled fault slip result) and measured data (e.g., a measurement of the subsurface earth volume)..

At block 1316, the cost associated with the newly computed modeled fault slip result is evaluated. If the cost is not satisfactory, then the method loops back to block 1312 to select new random parameter values. If the cost is satisfactory, then the method continues to block 1318.

At block 1318, the regional stress attribute from block 1314 are applied to the subsurface earth volume to generate modeling results, e.g., with respect to a query about the subsurface earth volume or in response to an updated parameter about the subsurface earth volume. In one or more embodiments, the modeling results are generated in real time. In other words, the modeling results are generated within a pre-determined time (e.g., a second, a minute, an hour, etc.) subsequent to receiving the query or the updated parameter about the subsurface earth volume. For example, the modeling results may include one or more of a stress inversion, a stress field, a far field stress value, a stress interpolation in a complex faulted reservoir, a perturbed stress field, a stress ratio and associated orientation, one or more tectonic events, a displacement discontinuity of a fault, a fault slip, an estimated displacement, a perturbed strain, a slip distribution on faults, quality control on interpreted faults, fracture prediction, prediction of fracture propagation according to perturbed stress field, real-time computation of perturbed stress and displacement fields while performing interactive parameters estimation, or discernment of an induced fracture from a preexisting fracture.

Based on the modeling results, a field operation of the well is performed in accordance with one or more embodiments of the technology. In one or more embodiments of the technology, performing the field operation may include sending a control signal to drilling and exploration equipment, well control injectors and valves (or other control devices in real-world control of a reservoir), transport and delivery network, surface facility, and so forth. The field operation may be used to gather hydrocarbons and other minerals from a subsurface formation.

At block 1320, a query or updated parameter regarding the subsurface earth volume is received, that seeds or initiates generation of the modeling results in the real-time results section (1310) of the method 1300.

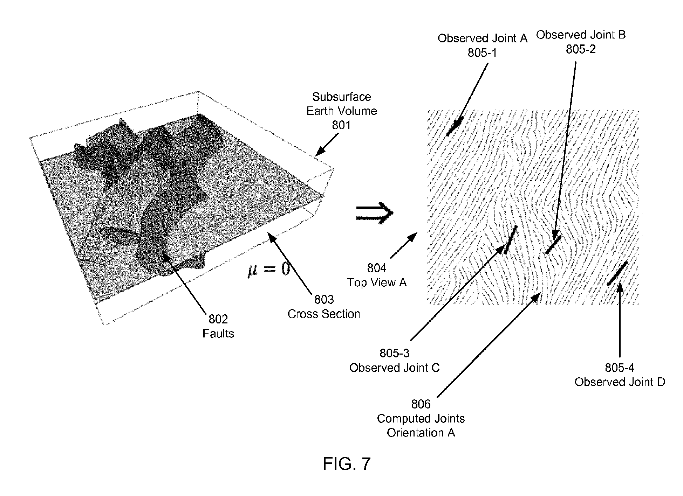

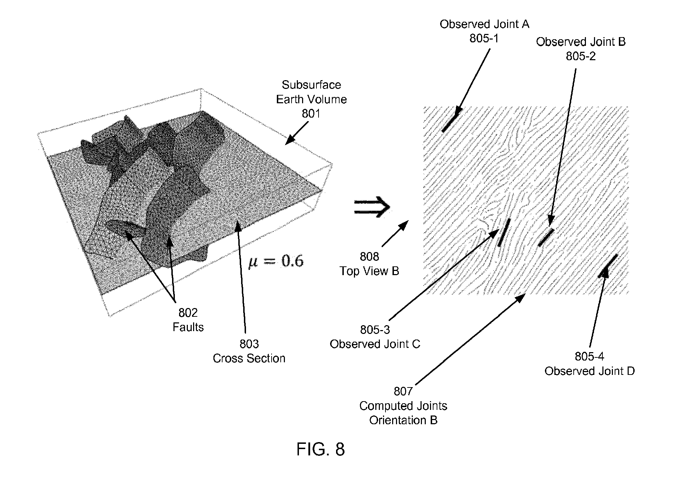

FIG. 7 and FIG. 8 show an example of stress, fracture, and fault activity modeling. Specifically, FIG. 8 shows a perspective view of a subsurface earth volume 801 having multiple faults 802 represented as triangulated surfaces. For modeling purposes, the subsurface earth volume 801 is gridded into a number of observation points. Those observation points lying on the cross section 803 are shown as dots. Although not explicitly shown other than on the cross section 803, the observation points may exist throughout the subsurface earth volume 801. As described above, stress, strain, and/or displacements values may be computed for each of these observation points.

Further as shown in FIG. 8, top view A 804 corresponds to the cross section 803 and represents computed joints orientation A 806 that is shown as fingerprint-like lines across the cross section 803. As described above, for opening fractures (e.g., joints, veins, dikes) the orientation of the normal to the fracture plane indicates the direction of the least compressive stress direction (i.e., $\sigma_3$). Specifically, the computed joints orientation A 806 is based on optimized values of θ and R' using a Monte Carlo method as described in reference to FIG. 6 above where no friction is considered for the multiple faults 802. In other words, the sliding friction coefficient $\mu$ is set to 0 in the model matrix. In one or more embodiments, the sliding friction coefficient $\mu$ is assigned as 0 by a user. In one or more embodiments, the sliding friction coefficient $\mu$ may be included in the Monte Carlo random variables (along with θ and R') and assigned the value 0 by the stress and friction parameter selector 308 depicted in FIG. 3 above. In addition, the top view A 804 is superimposed with bold segments representing observed joints orientations of the observed joint A (805-1), observed joint B (805-2), observed joint C (805-3), and observed joint D (805-4). The collection of these observed joints orientations is an example of the data sets 302 depicted in FIG. 3 above.

Comparison of the computed joints orientation A 806 and the bold segments representing observed joints orientations shows agreement between computed orientation and observed orientation for the observed joint A (805-1) and observed joint D (805-4). However, the computed orientation and observed orientation are grossly mis-matched for the observed joint B (805-2) and the observed joint C (805-3). Consistent with this visual comparison, the cost assessment engine 310 depicted in FIG. 3 above determines that selecting the value "0" for the sliding friction coefficient for the faults 802 does not result in lowest cost, even by choosing all possible combination R', and θ. Accordingly, a different value for the sliding friction coefficient is selected as shown in FIG. 8 below. In one or more embodiments, the different value is chosen manually by the user. In one or more embodiments, the different value is chosen by the stress and friction parameter selector 308 according to the Monte Carlo method. FIG. 8 shows the top view B 808 corresponds to the cross section 803 and represents the computed joints orientation B 807 based on the sliding friction coefficient being set to the value of 0.6. Comparison of the computed joints orientation B 808 and the bold segments representing observed joints orientations shows agreement between computed orientation and observed orientation for all of observed joint A (805-1), observed joint B (805-2), observed joint C (805-3), and observed joint D (805-4). Consistent with this visual comparison, the cost assessment engine 310 determines that selecting the value 0.6 for the sliding friction coefficient, while optimizing values of θ and R', results in lowest cost. Accordingly, the optimized values of θ and R' and particular selection of 0.6 for the sliding friction coefficient are used in generating the results 312 depicted in FIG. 3 above.

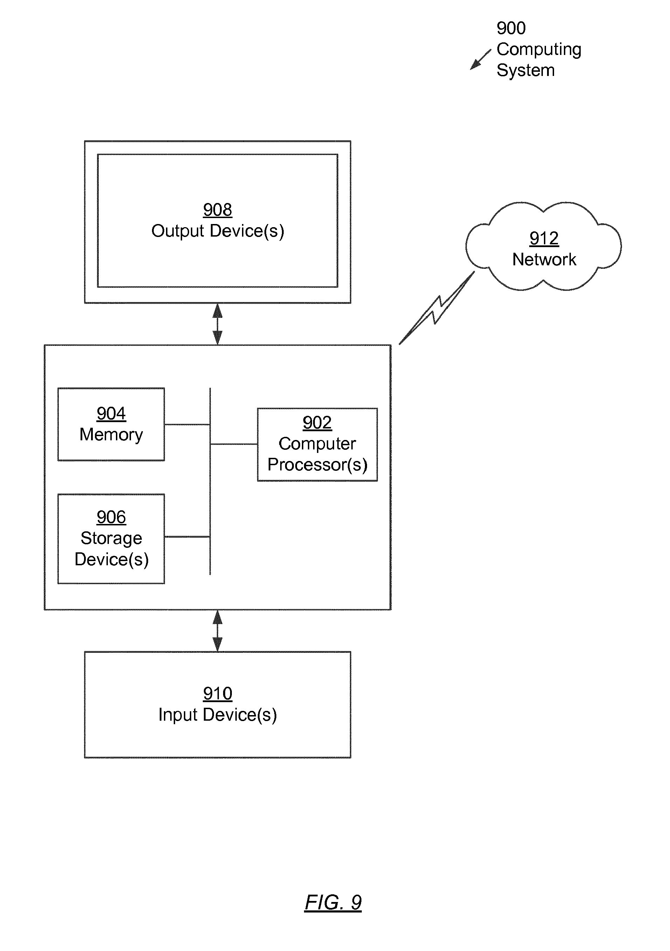

Embodiments of the technology may be implemented on a computing system. Any combination of mobile, desktop, server, embedded, or other types of hardware may be used. For example, as shown in FIG. 9, the computing system 900 may include one or more computer processor(s) 902, associated memory 904 (e.g., random access memory (RAM), cache memory, flash memory, etc.), one or more storage device(s) 906 (e.g., a hard disk, an optical drive such as a compact disk (CD) drive or digital versatile disk (DVD) drive, a flash memory stick, etc.), and numerous other elements and functionalities. The computer processor(s) 902 may be an integrated circuit for processing instructions. For example, the computer processor(s) may be one or more cores, or micro-cores of a processor. The computing system 900 may also include one or more input device(s) 910, such as a touchscreen, keyboard, mouse, microphone, touchpad, electronic pen, or any other type of input device. Further, the computing system 900 may include one or more output device(s) 908, such as a screen (e.g., a liquid crystal display (LCD), a plasma display, touchscreen, cathode ray tube (CRT) monitor, projector, or other display device), a printer, external storage, or any other output device. One or more of the output device(s) may be the same or different from the input device(s). The computing system 900 may be connected to a network 912 (e.g., a local area network (LAN), a wide area network (WAN) such as the Internet, mobile network, or any other type of network) via a network interface connection (not shown). The input and output device(s) may be locally or remotely (e.g., via the network 912) connected to the computer processor(s) 902, memory 904, and storage device(s) 906. Many different types of computing systems exist, and the aforementioned input and output device(s) may take other forms.

Software instructions in the form of computer readable program code to perform embodiments of the technology may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments of the technology.

Further, one or more elements of the aforementioned computing system 900 may be located at a remote location and connected to the other elements over a network 912. Further, embodiments of the technology may be implemented on a distributed system having a plurality of nodes, where each portion of the technology may be located on a different node within the distributed system. In one embodiment of the technology, the node corresponds to a distinct computing device. The node may correspond to a computer processor with associated physical memory. The node may correspond to a computer processor or micro-core of a computer processor with shared memory and/or resources.

Conclusion

Although example systems and methods have been described in language specific to structural features and/or methodological acts, it is to be understood that the subject matter defined in the appended claims is not limited to the specific features or acts described. Rather, the specific features and acts are disclosed as example forms of implementing the claimed systems, methods, and structures.

Further, while the above description includes a limited number of embodiments, those skilled in the art, having benefit of this disclosure, will appreciate that other embodiments can be devised which do not depart from the scope of the claims.

Although only a few example embodiments have been described in detail above, those skilled in the art will readily appreciate that many modifications are possible in the example embodiments without materially departing from presenting stress inversion using frictional faults. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents, in that a nail employs a cylindrical surface to secure wooden parts together, whereas a screw employs a helical surface. In the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

**Claims**

1. A method for predicting regional stress of a subsurface volume, comprising:

    obtaining a model of the subsurface volume, wherein the model comprises a model matrix representing a relationship between a modeled fault slip result generated by the model and a boundary condition applied to the model, wherein the boundary condition comprises a regional stress attribute and a fault friction attribute;
    calculating, using the model, the modeled fault slip result based on a selected value of the stress attribute and a selected value of the friction attribute;
    calculating a cost function representing a difference between the modeled fault slip result and a measurement of the subsurface volume; and
    minimizing the cost function by iteratively adjusting at least the selected value of the stress attribute, wherein iteratively adjusting the selected value to minimize the cost function generates a prediction of the regional stress of the subsurface volume.

2. The method of claim 1, further comprising:

    assigning randomly selected values to the stress attribute and the friction attribute, wherein the randomly selected values comprises the selected value of the stress attribute and the selected value of the friction attribute,
    wherein minimizing the cost function is further by iteratively adjusting the selected value of the friction attribute, and
    wherein minimizing the cost function by iteratively adjusting the selected value of the stress attribute and the selected value of the friction attribute is based on a Monte Carlo method.

3. The method of claim 1, further comprising:

    calculating at least one parameter selected from a group consisting of stress, strain, and displacement parameter based on the modeled fault slip result, wherein the modeled fault slip result comprises a slip distribution with respect to a plurality of faults in the subsurface volume, and
    wherein calculating the cost function comprises comparing the at least one parameter and the measurement of the subsurface volume to generate the difference.

4. The method of claim 1,
    wherein the stress attribute comprises a fault regime specific stress ratio and a stress orientation, and
    wherein the friction attribute comprises a sliding friction coefficient.

5. The method of claim 1, wherein the measurement of the subsurface volume comprises at least one selected from a group consisting of seismic interpretation data, well bore data, and field observation data.

6. The method of claim 1, wherein the measurement of the subsurface volume comprises at least one selected from a group consisting of fault geometry data, fracture orientation data, stylolites orientation data, secondary fault plane data, fault throw data, slickenline data, global positioning system (GPS) data, interferometric synthetic aperture radar (InSAR) data, laser ranging data, tilt-meter data, displacement data for a geologic fault, and stress magnitude data for the geologic fault.

7. The method of claim 1, further comprising:

    generating, by iteratively adjusting the selected value of the stress attribute and the friction attribute, a predicted attribute of the subsurface volume,
    wherein the predicted attribute comprises at least one selected from a group consisting of a stress inversion, a stress field, a far field stress value, a stress interpolation in a complex faulted reservoir, a perturbed stress field, a stress ratio and associated orientation, one or more tectonic events, a displacement discontinuity of a fault, a fault slip, an estimated displacement, a perturbed strain, a slip distribution on faults, quality control on interpreted faults, fracture prediction, prediction of fracture propagation according to perturbed stress field, real-time computation of perturbed stress and displacement fields while performing interactive parameters estimation, or discernment of an induced fracture from a preexisting fracture.

8.  A system for predicting fault activity of a subsurface volume, comprising:

    a sensory device configured to obtain a measurement of the subsurface volume;
    a stress and fracture modeling engine configured to:

    obtain a model of the subsurface volume, wherein the model comprises a model matrix that represents a relationship between a modeled fault slip result generated by the model and a boundary condition applied to the model, wherein the boundary condition comprises a regional stress attribute and a fault friction attribute;
    calculate, using the model, the modeled fault slip result based on a selected value of the stress attribute and a selected value of the friction attribute;
    calculate a cost function representing a difference between the modeled fault slip result and a measurement of the subsurface volume; and
    minimize the cost function by iteratively adjusting at least the selected value of the stress attribute and the friction attribute, wherein iteratively adjusting the selected value to minimize the cost function generates a prediction of the regional stress of the subsurface volume; and

    a control device configured to generate, based on the prediction of the regional stress, a control signal of a field operation of the subsurface volume.

9.  The system of claim 8, wherein the stress and fracture modeling engine is further configured to:

    assign randomly selected values to the stress attribute and the friction attribute, wherein the randomly selected values comprises the selected value of the stress attribute and the selected value of the friction attribute,
    wherein minimizing the cost function is further by iteratively adjusting the selected value of the friction attribute, and
    wherein minimizing the cost function by iteratively adjusting the selected value of the stress attribute and the selected value of the friction attribute is based on a Monte Carlo method.

10. The system of claim 8, wherein the stress and fracture modeling engine is further configured to:

    calculate at least one parameter selected from a group consisting of stress, strain, and displacement parameter based on the modeled fault slip result, wherein the modeled fault slip result comprises a slip distribution with respect to a plurality of faults in the subsurface volume, and
    wherein computing the cost function comprises comparing the at least one parameter and the measurement of the subsurface volume to generate the difference

11. The system of claim 8,
    wherein the stress attribute comprises a fault regime specific stress ratio and a stress orientation, and
    wherein the friction attribute comprises a sliding friction coefficient.

12. The system of claim 8, wherein the measurement of the subsurface volume comprises at least one selected from a group consisting of seismic interpretation data, well bore data, and field observation data.

13. The system of claim 8, wherein the measurement of the subsurface volume comprises at least one selected from a group consisting of fault geometry data, fracture orientation data, stylolites orientation data, secondary fault plane data, fault throw data, slickenline data, global positioning system (GPS) data, interferometric synthetic aperture radar (InSAR) data, laser ranging data, tilt-meter data, displacement data for a geologic fault, and stress magnitude data for the geologic fault.

14. The system of claim 8, wherein the stress and fracture modeling engine is further configured to:

    generate, by iteratively adjusting the selected value of the stress attribute and the friction attribute, a predicted attribute of the subsurface volume,

wherein the predicted attribute comprises at least one selected from a group consisting of a stress inversion, a stress field, a far field stress value, a stress interpolation in a complex faulted reservoir, a perturbed stress field, a stress ratio and associated orientation, one or more tectonic events, a displacement discontinuity of a fault, a fault slip, an estimated displacement, a perturbed strain, a slip distribution on faults, quality control on interpreted faults, fracture prediction, prediction of fracture propagation according to perturbed stress field, real-time computation of perturbed stress and displacement fields while performing interactive parameters estimation, or discernment of an induced fracture from a preexisting fracture.

**15.** A non-transitory computer readable medium storing instructions for predicting fault activity of a subsurface volume, the instructions, when executed by a computer processor, perform the method of any one of claims 1 to 7.

FIG. 1

FIG. 2

STRESS AND FRACTURE MODELING ENGINE
102

DATA SETS 302

RESULTS
312

INITIALIZATION ENGINE
304

Stress and Friction Parameter
Selector
308

COST ASSESSMENT
ENGINE
310

YES

NO

$\vec{b}$ $\vec{t}$ $\vec{u}$ $\varepsilon$ $\sigma$

O(p)

FIG. 3

FIG. 4

FIG. 5

EP 2 966 602 A1

1300 ─⟍

RECEIVE FAULTS GEOMETRY OF A SUBSURFACE
EARTH VOLUME
1302

RECEIVE AT LEAST ONE DATA SET
1304

Obtain a model of the subsurface volume that generates
modeled fault slip result based on boundary conditions of
regional stress attribute and fault friction attribute
1306

RECEIVE QUERY OR
UPDATED PARAMETER
REGARDING THE
SUBSURFACE EARTH
VOLUME
1320

1310 ─⟍

REAL
TIME
RESULTS
SECTION

Select values of regional stress attribute and fault friction
attribute
1312

Compute the modeled fault slip result and a cost representing a
difference between modeled data and measured data    1314

IS THE COST
SATISFACTORILY LOW?
1316

NO

YES

FIG. 6

Use the optimal values of the regional stress attribute and fault
friction attribute to generate modeling results of the subsurface
volume, and use the modeling results to perform a field operation
1318

25

FIG. 7

FIG. 8

900
Computing
System

908
Output Device(s)

912
Network

904
Memory

902
Computer
Processor(s)

906
Storage
Device(s)

910
Input Device(s)

*FIG. 9*

Europäisches
Patentamt

European
Patent Office

Office européen
des brevets

## EUROPEAN SEARCH REPORT

Application Number

EP 15 17 5705

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/04<br>G06Q50/02 |

TECHNICAL FIELDS
SEARCHED (IPC)

G06Q

The present search report has been drawn up for all claims

| Place of search | Date of completion of the search | Examiner |
|---|---|---|
| The Hague | 4 November 2015 | De Smet, Michaël |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1456727

**Non-patent literature cited in the description**

- **F. MAERTEN ; P. G. RESOR ; D. D. POLLARD ; L. MAERTEN.** Inverting for slip on three-dimensional fault surfaces using angular dislocations. *Bulletin of the Seismological Society of America,* 2005, vol. 95, 1654-1665
- **A. L. THOMAS.** Poly3D: a three-dimensional, polygonal element, displacement discontinuity boundary element computer program with applications to fractures, faults, and cavities in the earth's crust. *Master's thesis,* 1995
- **F. MAERTEN ; L. MAERTEN ; M. COOKE.** Solving 3d boundary element problems using constrained iterative approach. *Computational Geosciences,* 2009
- **MAERTEN et al.** Solving 3D boundary element problems using constrained iterative approach. *Computational Geosciences,* 2010
- **ANDERSON, E.** The dynamics of faulting. *Edinburgh Geol. Soc.,* 1905, vol. 8 (3), 387-402